# EUROPEAN PATENT SPECIFICATION

(11) **EP 2 879 020 B1**
(45) Date of publication and mention of the grant of the patent: **14.11.2018**
(21) Application number: 13831638.5
(22) Date of filing: 19.06.2013
(51) Int. Cl.: G06F 3/01

(54) **DISPLAY CONTROL METHOD, APPARATUS, AND TERMINAL**
ANZEIGESTEUERVERFAHREN, VORRICHTUNG UND ENDGERÄT
PROCÉDÉ, APPAREIL ET TERMINAL DE COMMANDE D'AFFICHAGE

(30) Priority: 24.08.2012 CN 201210305149
(43) Date of publication of application: 03.06.2015
(73) Proprietor: ZTE Corporation, Shenzhen, Guangdong 518057 (CN)
(72) Inventor: QIANG, Wei, Shenzhen Guangdong 518057 (CN)
(74) Representative: Prinz & Partner mbB
(86) International application number: PCT/CN2013/077509
(87) International publication number: WO 2014/029229

(56) References cited:
- CN-A- 102 012 742
- CN-A- 102 081 503
- CN-A- 102 880 290
- US-A1- 2004 017 472
- US-A1- 2012 162 603
- QIANG JI ET AL: "Eye and Gaze Tracking for Interactive Graphic Display", INTERNATIONAL SYMPOSIUM ON SMART GRAPHICS, XX, XX, 13 June 2002 (2002-06-13), pages 79-85, XP002303187,

## Description

### TECHNICAL FIELD

The present disclosure relates to the field of terminal display, and in particular to a display control method, device and terminal.

### BACKGROUND

With the popularity of mobile terminals such as mobile phones and tablet computers, various additional functions of mobile terminals are increasing, for example devices such as cameras and touch screens; existing approaches for a user of a mobile terminal to control display of a screen (for example display of an electronic book, a webpage and an image) mainly include control of content displays of terminal devices through a keyboard, a mouse or a touch screen, for example page up/down or page left/right, zoom in/out of texts or images and the like.

The approaches of controlling display of a terminal through a keyboard, a mouse or a touch screen all have an apparent feature, i.e. a user is required to use his/her finger(s) to perform a click operation or a gesture control; however, in some special cases (for example during a meal), the user cannot perform a click operation since his/her hands are fully occupied, furthermore, since an operation on the touch screen is a contact operation, many operations thereon are readily misjudged, for example an unexpected single click during a page down/up operation is considered as an operation of confirmation, cancellation or backspace.

Therefore, for those skilled in the art, it is a problem demanding prompt solution to provide a totally new display control method based on the prior art so as to free both hands of a user.

US 2012/0162603 A1 discloses that a display unit has a display area of a predetermined shape and displays an image on the display area. An image capturing unit generates data of a captured image by capturing an image of an eye of a user in which the display area is reflected. A reference detection unit detects a moving reference point that moves along with the movement of user's eye-gaze and an unmoving reference point that can be assumed as approximately stationary regardless of the user's eye-gaze movement, and generates a vector drawn from the unmoving reference point to the moving reference point as a shift amount. An eye-gaze detection unit detects a movement vector as the user's eye-gaze movement amount based on a reference shift amount generated in the past and the shift amount currently generated.

US 2004/0017472 A1 discloses a method for tracking the location of the tip of the nose with a video camera, and a hands-free computer input device based thereon. According to this invention, a convex shape such as the shape of the tip of the nose is a robust object suitable for precise and smooth location tracking purposes. The disclosed method and apparatus are substantially invariant to changes in head pose, user preferred seating distances and brightness of the lighting conditions. The location of the nose can be tracked with pixel and sub-pixel accuracy.

QIANG JI ET AL: "Eye and Gaze Tracking for Interactive Graphic Display", INTERNATIONAL SYMPOSIUM ON SMART GRAPHICS, 12 June 2002, XP002303187 describes preliminary results obtained in developing a computer vision system based on active IR illumination for real time gaze tracking for interactive graphic display. Unlike most of the existing gaze tracking techniques, which often require assuming a static head to work well and require a cumbersome calibration process for each person, this gaze tracker can perform robust and accurate gaze estimation without calibration and under rather significant head movement. This is made possible by a new gaze calibration procedure that identifies the mapping from pupil parameters to screen coordinates using the Generalized Regression Neural Networks (GRNN). With GRNN, the mapping does not have to be an analytical function and head movement is explicitly accounted for by the gaze mapping function. Furthermore, the mapping function can generalize to other individuals not used in the training. The effectiveness of this gaze tracker is demonstrated by preliminary experiments that involve gaze-contingent interactive graphic display.

### SUMMARY

In order to solve a problem that current display control techniques must depend on manual operations, the present disclosure provides a display control method according to claim 1, device according to claim 5 and terminal according to claim 9.

In order to accomplish objectives of the present disclosure, the present disclosure provides a display control method, device and terminal that control terminal display based on facial movements; in an embodiment, the display control method provided by the present disclosure includes steps of:
a facial image of a user is periodically acquired;
coordinates of a reference point are calculated according to the facial image; and
an operation is performed according to the coordinates of the reference point and preset coordinates;
wherein when the reference point is one or two center points of pupils of the user in the facial image, the calculating coordinates of the reference point according to the facial image may include steps of:
   an RGB component image of the facial image is acquired, and a red component image is selected, wherein a RGB ratio for facial skin of the user is R-255, G-204, B-102, and a RGB ratio for pupil center of the user is R-0, G-0, B-0;
   a reverse color diagram of the red component image is obtained by subtracting 255 from component values of respective points of the red component image;
   coordinates of peak values in an X axis direction and in an Y axis direction are acquired by performing accumulation on the reverse color diagram in the X axis direction and in the Y axis direction respectively; and
   the coordinates of the reference point are determined according to the coordinates of the peak values.

Preferably, in the above embodiment the preset coordinates may be spatial coordinates of the reference point when the user reads normally currently-displayed content.

Preferably, in the above embodiment the step of performing an operation according to the coordinates of the reference point and preset coordinates may specifically include two implementation ways:
a motion vector of the reference point is calculated according to the coordinates of the reference point and the preset coordinates, and the operation is performed according to a change of the motion vector of the reference point within a preset period of time; or
a spatial position of the reference point is determined according to the coordinates of the reference point and the preset coordinates;
the operation is performed according to a change of the spatial position of the reference point within a preset period of time.

The present disclosure also provides a display control device based on a facial image, and in an embodiment the display control device may include an acquisition module, a processing module and an execution module, wherein
the acquisition module is configured to acquire periodically a facial image of a user;
the processing module is configured to calculate coordinates of a reference point according to the facial image, compare the coordinates of the reference point with preset coordinates and output a processing result to the execution module; and
the execution module is configured to execute an operation according to the processing result;
the processing module comprises a calculation unit configured to, when the reference point is one or two center points of pupils of the user in the facial image, acquire an RGB component image of the facial image, select a red component image, wherein a RGB ratio for facial skin of the user is R-255, G-204, B-102, and a RGB ratio for pupil center of the user is R-0, G-0, B-0;
obtain a reverse color diagram of the red component image by subtracting 255 from component values of respective points of the red component image,
acquire coordinates of peak values in an X axis direction and in an Y axis direction by performing accumulation on the reverse color diagram in the X axis direction and in the Y axis direction respectively, and
determine the coordinates of the reference point according to the coordinates of the peak values.

Moreover, in order to apply the display control techniques provided by the present disclosure into practical application, the present disclosure further provides a display control terminal; in an embodiment, the display control terminal may include a sensing device, a display device and the
display control device provided by the present disclosure; the display control device is configured to acquire periodically the facial image of the user through the sensing device, calculate the coordinates of the reference point according to the facial image, and control content display of the display device according to the coordinates of the reference point and the preset coordinates.

Embodiments of the present disclosure provide a technique for controlling display of a terminal based on facial actions of a user, firstly, the technique performs display control based on facial images of a user, thus freeing thoroughly both hands of the user; secondly, the technique performs display control based on relative coordinates of a reference object (point) on the user's face, and the user can set as required the reference object (point), thus making it possible to provide the user with diversified individualized selections; next, the operation principle of the technique is simple, the display of the terminal can be controlled only according to changes of the reference object (point) in spatial position or in motion vector, thus having low requirements on the terminal's hardwares; finally, the technique is convenient and efficient since it can perform control based on a change of the position of the user's pupil when the user is reading; to sum up, with the implementation of the present disclosure, the user can implement control of content displayed by a terminal using only facial actions rather than a keyboard, a mouse or a touch screen, thus enhancing user experiences.

### BRIEF DESCRIPTION OF THE DRAWINGS

Fig, 1 is a schematic structural diagram of a display control terminal 1 according to an embodiment of the present disclosure;
Fig, 2 is a schematic structural diagram of a display control device 12 according to an embodiment of the present disclosure;
Fig, 3 is a schematic structural diagram of a processing module 122 of a display control device 12 according to a preferred embodiment of the present disclosure;
Fig. 4 is a flow chart of a display control method according to an embodiment of the present disclosure;
Fig. 5a is a flow chart of a method for positioning a reference object according to an embodiment of the present disclosure;
Fig. 5b is a schematic diagram of a facial image according to an embodiment of the present disclosure;
Fig. 6a is a flow chart of a display control method according to an embodiment of the present disclosure;
Fig. 6b is a schematic diagram showing a reference object's change in spatial position according to an embodiment of the present disclosure;
Fig. 6c is a schematic diagram showing a reference object's change in spatial position according to an embodiment of the present disclosure;
Fig. 6d is a schematic diagram showing a reference object's change in spatial position according to an embodiment of the present disclosure;
Fig. 7a is a flow chart of a display control method according to an embodiment of the present disclosure;
Fig. 7b is a schematic diagram showing a reference object's change in motion vector according to an embodiment of the present disclosure;
Fig. 7c is a schematic diagram showing a reference object's change in motion vector according to an embodiment of the present disclosure;
Fig. 7d is a schematic diagram showing a reference object's change in motion vector according to an embodiment of the present disclosure;
Fig. 7e is a schematic diagram showing a reference object's change in motion vector according to an embodiment of the present disclosure;
Fig. 7f is a schematic diagram showing a reference object's change in motion vector according to an embodiment of the present disclosure; and
Fig. 7g is a schematic diagram showing a reference object's change in motion vector according to an embodiment of the present disclosure.

### DETAILED DESCRIPTION

The present disclosure will be further elaborated below through specific embodiments in combination with accompanying drawings.

In order to solve the problem that current display control techniques must depend on manual operations, the present disclosure provides a totally new display control technique that controls display of a terminal device through monitoring in real time, by the terminal device, actions of a user's face (or head) and calculating a change of a reference object on the user's face in position between current coordinates and set coordinates or in motion vector.

Fig, 1 is a schematic structural diagram of a display control terminal 1 according to an embodiment of the present disclosure.

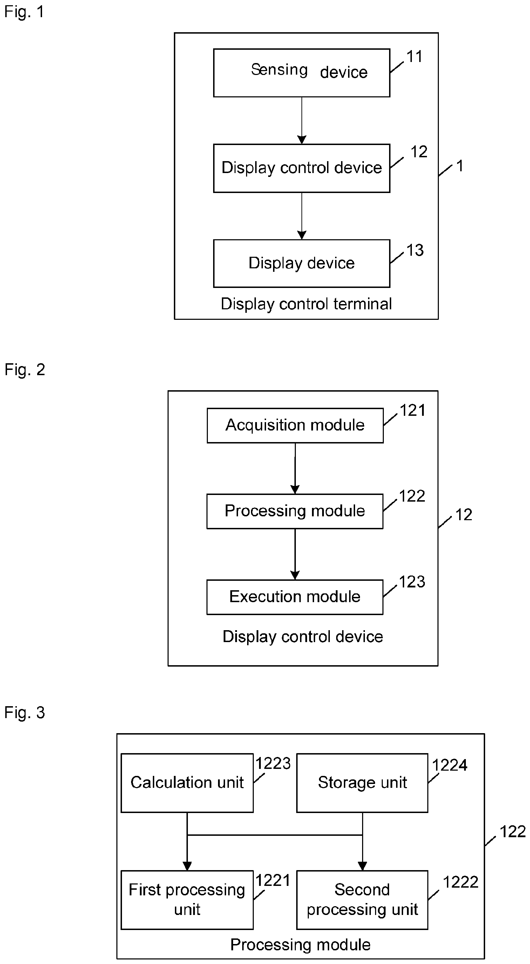

It can be seen from Fig. 1 that according to an embodiment a display control terminal 1 provided by the present disclosure includes: a sensing device 11 configured to sense actions of a user's face (or head), a display device 13 configured to display content and a display control device 12 configured to control content displayed by the display device; the display control device 12 acquires a facial image of the user through the sensing device 11, and controls display of the display device 13 after a series of processing (elaborated thereinafter).

In the above embodiment, the sensing device 11 includes but is not limited to a camera, an infrared sensing device and other sensing devices based on other senses; the display device 13 includes but is not limited to a screen of a mobile phone, a display of a computer, a screen of a projector or an indoor/outdoor LED display.

Fig. 2 is a schematic structural diagram of the display control device 12 in the display control terminal 1 as shown in Fig. 1.

It can be seen from Fig. 12 that according to an embodiment the display control device 12 included in the display control terminal 1 according to the above embodiment, includes an acquisition module 121, a processing module 122 and an execution module 123, wherein
the acquisition module 121 is configured to acquire periodically a facial image of a user and transmit acquired facial image to the processing module 122;
the processing module 122 is configured to calculate coordinates of a reference object according to the facial image, compare the coordinates of the reference object with preset coordinates and output a processing result to the execution module 123; and
the execution module 123 is configured to execute an operation according to the processing result transmitted by the processing module 122.

In the above embodiment, the acquisition module 121 acquires the facial image of the user through the sensing device 11 of the display control terminal 1; the execution module 123 is then used to control display of the display device 13 of the display control terminal 1.

In an embodiment, the reference object mentioned in the above embodiment may be any point of the facial image, for example any one pupil, apex of nose or even a marking point on a user's face can be acceptable; the preset coordinates are spatial coordinates of a selected reference object when the user reads normally currently-displayed content, it should be noted that the spatial coordinates of the reference object may be coordinates of only a point when the terminal device outputs through a small display and the spatial coordinates of the reference object are a range of coordinates when the terminal device outputs through a medium or large display, however, the type of the spatial coordinates of the reference object will not affect implementation of the present disclosure.

Fig, 3 is a schematic structural diagram of a processing module 122 of the display control device 12 as shown in Fig. 2.

It can be seen from Fig. 3 that in a preferred embodiment of the present disclosure, the processing module 122 of the display control device 12 as shown in Fig. 2 may include a first processing unit 1221, a second processing unit 1222, a calculation unit 1223 and a storage unit 1224, wherein
the first processing unit 1221 is configured to calculate a motion vector of the reference object according to the coordinates of the reference object and the preset coordinates, and output a processing result according to a change of the reference object in motion vector within a preset period of time;
the second processing unit 1222 is configured to calculate a spatial position of the reference object according to the coordinates of the reference object and the preset coordinates, and output a processing result according to a change of the reference object in spatial position within a preset period of time;
the calculation unit 1223 is configured to, when the reference object is one or two center points of pupils of the user in the facial image, acquire an RGB component image of the facial image, select a red component image, obtain a reverse color diagram of the red component image by subtracting 255 from component values of respective points of the red component image, acquire coordinates of peak values in a X axis direction and in a Y axis direction by performing accumulation on the reverse color diagram in the X axis direction and in the Y axis direction respectively, and determine the coordinates of the reference object according to the coordinates of the peak values; certainly, the calculation unit 1223 is mainly used to implement a function of positioning an reference object and it can implement positioning of the reference object through other positioning ways.
the storage unit 1224 is configured to store spatial coordinates of a point or moving range of spatial coordinates of the reference object when the user reads normally currently-displayed content of the terminal device; certainly, it can also configured to store work logs of the display control device 12 so as to facilitate the user to perform operations such as calibration; moreover, when the calculation unit 1223 can implement a function of storing data in a flash memory way, the function of the storage unit 1224 can be implemented by the calculation unit 1223.

In the above embodiment, the first processing unit 1221 and the second processing unit 1222 don't necessarily exist simultaneously, either of them can process the coordinates of the reference object and the preset coordinates, and the two processing units are based on two different data processing mechanisms.

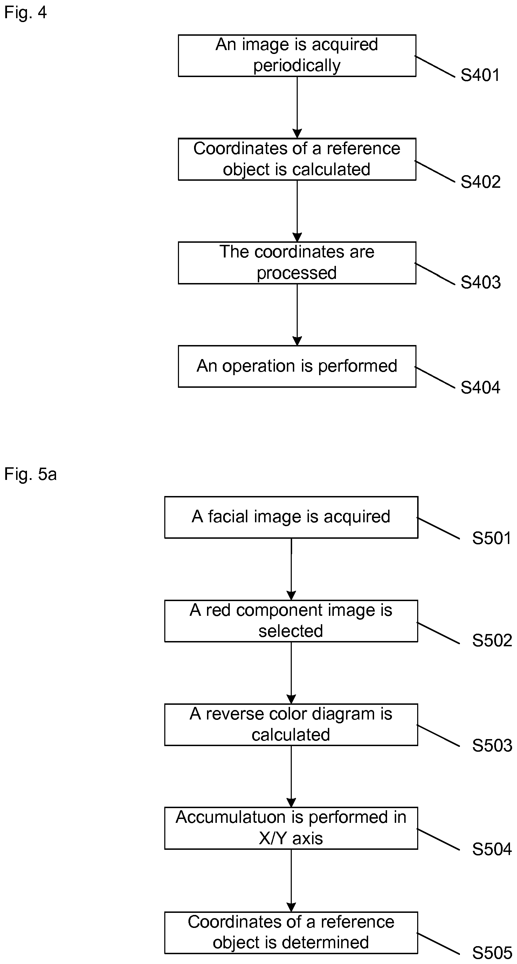

Fig. 4 is a flow chart of a display control method using the display control terminal 1 as shown in Fig. 1 according to an embodiment of the present disclosure.

It can be seen from Fig. 4 that in an embodiment, the display control method provided by the present disclosure includes the following steps:
S401, a facial image of a user is periodically acquired;
S402, coordinates of a reference object are calculated according to the facial image; and
S403, the coordinates of the reference object and preset coordinates are processed;
S404, an operation is executed according to a processing result.

In an embodiment, the reference object relating to the display control method as shown in Fig. 4 is any one point or multiple points in the facial image; the preset coordinates are spatial coordinates of the reference object when the user reads normally currently-displayed content.

In an embodiment, step S403 of the display control method as shown in Fig. 4 can be implemented in two ways, with their respective steps including:
a motion vector of the reference object is calculated according to the coordinates of the reference object and the preset coordinates;
an operation is performed according to a change of the motion vector of the reference object within a preset period of time;
or
a spatial position of the reference object is determined according to the coordinates of the reference object and the preset coordinates;
an operation is performed according to a change of the spatial position of the reference object within a preset period of time.

In an embodiment, when the reference object set by a user is a pupil of the user, implementation of step S402 of the display control method as shown in Fig. 4 includes:
an RGB component image of the facial image is acquired, and a red component image is selected;
a reverse color diagram of the red component image is obtained by subtracting 255 from component values of respective points of the red component image;
coordinates of peak values in a X axis direction and in a Y axis direction are acquired by performing accumulation on the reverse color diagram in the X axis direction and in the Y axis direction respectively; and
the coordinates of the reference object are determined according to the coordinates of the peak values.

In order to better describe the display control technique provided by the present disclosure, the present disclosure will be further elaborated in below embodiments in combination with daily life.

Implementation of the present disclosure mainly includes two aspects: a method for selecting and positioning a reference object in a facial image and a method for analyzing and controlling facial actions, and the two aspects are respectively described as follows.

The method for selecting and positioning a reference object in a facial image:

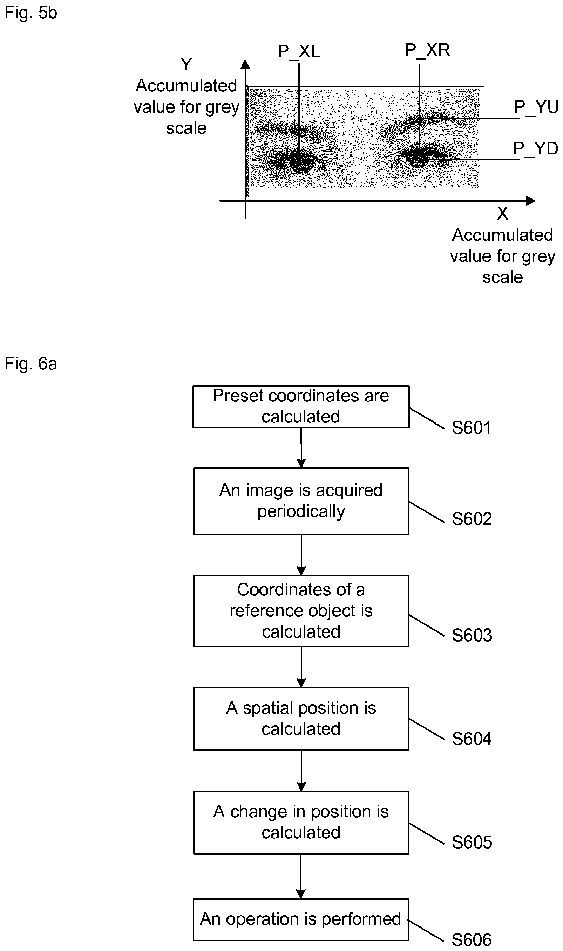

Fig. 5a is a flow chart of a method for positioning a reference object according to an embodiment of the present disclosure; Fig. 5b is schematic diagram of a facial image in embodiment of the present disclosure.

When the reference object is selected, the user is provided with individualized selections as required (marking points such as apex of nose or middle point between eyebrows), the user can certainly use a default configuration, and a default reference object is a middle point of a user's pupil.

The display control technique provided by the present disclosure is described below with reference to an embodiment in which assumptions are made as below: the user is of yellow race with yellow skin and black eyes, the sensing device of the display control terminal is a camera, the display device of the display control terminal is the display of a mobile phone, the user uses a default reference object of the display control terminal; then it can be seen from Fig. 5a that in an embodiment the method for positioning the reference object includes the following steps:
S501, a facial image of a user is acquired using a camera;
   a facial image as shown in Fig. 5b is obtained by adjusting appropriately the position of the camera;
S502, a red component image (R_img) in an RGB color image of a current facial image of the user is selected as data to be processed;
   since the RGB ratio for a person of yellow race with yellow skin (flesh color) is R-255: G-204: B-102, and the RGB ratio for the pupil center of a black eye is R-0: G-0: B-0, it can be seen that the color difference for red is most prominent, thus the red component is selected for calculation since it involves minimum errors, other color components can certainly be selected for calculation and the detailed description thereof will be omitted.
S 503, a red component reverse color diagram R_R_img is obtained by subtracting 255 from the red component image R_img;
   then pixel data in most of the facial image are 0, and the data of the pupil center (and eyebrows) is 255;
S504, accumulation is performed on the red component reverse color diagram in the X axis direction and in the Y axis direction respectively;
   as shown in Fig. 5b, the accumulation in the X axis direction gets two peaks P_XL and P_XR which are centers of left and right pupils respectively, and the accumulation in Y axis direction also gets two peaks P_YU and P_YD which are centers of one eyebrow and one pupil;
S505, the coordinates of the reference object are determined;

Interferences from the eyebrow (P_YU) are eliminated (since the eyebrow is permanently above the eye), thus only the peak P_YD in Y axis direction is retained, then the coordinates of centers of the user's left/right pupil can be determined, then one pupil selected by the user or predefined by the system is regarded as the reference object and the coordinates of the reference object are recorded.

For users having combinations of other skin colors and eye colors, when the method for positioning a reference object as shown in Fig. 5a is used, the selection of which component image in an RGB color image of a user's facial image that is processed can be determined according to a pre-acquired facial image of a user and an RGB color look-up table (that can be downloaded via http://www.114la.com/other/rgb.htm); those skilled in the art can readily implement the selection, thus the selection process will not be described herein.

It should be noted that the positioning method as shown in Fig. 5a can be implemented by other ways for positioning a reference object, such as spatial coordinate positioning, polar coordinate positioning and infrared positioning.

The method for analyzing and controlling facial actions:
Actions for several daily operations of a user are predetermined: moving of display content is implemented through slightly turning user's head up/down or to the left/right, for example, when a user wants to read content on a next page of the currently-displayed page, the user only needs to slightly lower his/her head and act as if he/she tries to look at the bottom (beyond the visual field) of the display; zooming in/out of the display content is implementing by decreasing/increasing a distance between the user's face and the display, for example, when texts are desired to be zoomed in, the user performs an action to slightly approach the display; a confirmation operation is implemented by nodding; and a cancellation operation is performed by heading shaking. Certainly, the display control terminal according to the present disclosure also supports actions defined by the user, for example operations such as close.

The display control technique provided by the present disclosure is described below with reference to an embodiment in which assumptions are made as below: coordinates of a reference object are 3D spatial coordinates, preset coordinates are moving range of spatial coordinates of the reference object when the user reads normally currently-displayed content of the terminal device, and operations include paging up/down/left/right (moving), zooming in/out, conformation and cancellation.

Fig. 6a is a flow chart of a display control method according to an embodiment of the present disclosure.

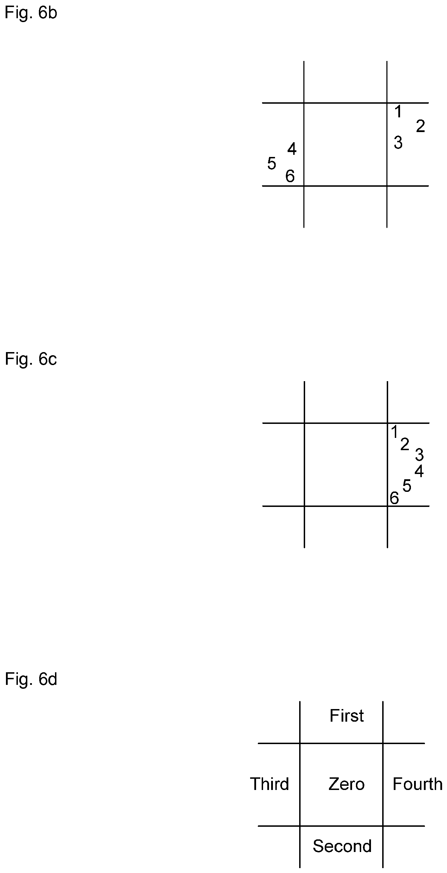

It can be seen from Fig. 6a that in an embodiment, the display control method provided by the present disclosure includes the following steps:
S601, preset coordinates are calculated and recorded;
   the method for positioning a reference object as shown in Fig. 5a is used to calculate moving range of spatial coordinates of the reference object when the user reads normally currently-displayed content of the terminal device;
S602, a facial image of a user is periodically acquired;
   since each camera device has an acquisition period, herein the period for acquiring facial images of a user is by default the acquisition period of the camera device;
S603, coordinates of a reference object are calculated;
   the method for positioning a reference object as shown in Fig. 5a is used to calculate spatial coordinates of the reference object in the current facial image;
S604, a spatial position of the reference object is determined;
   the current spatial position of the reference object is determined according to an obtained coordinates of the reference object calculated in step S603;
S605, a change of the spatial position of the reference object within a preset period of time is calculated;
   the duration of the preset period of time is an execution time T set by the user to perform nodding or head shaking actions, when the user doesn't set the duration of the preset period of time, the duration of the preset period of time is a system default duration (an average period of time of nodding or head shaking obtained through statistics), and the starting instant is a time at which the spatial position of the reference object exceeds the preset coordinates;
   for example the acquisition period of the terminal device is t and the execution time set by the user (or by default) to perform nodding or head shaking actions is T, then from the time at which the spatial position of the reference object exceeds a preset range of coordinates, changes of the reference object in spatial position within n acquisition periods are recorded and display is controlled according to the changes, wherein n=T/t; Fig. 6b and Fig. 6c are examples of the changes in spatial position;
S606, an operation is performed according to the change obtained in step S605;
   the operation includes paging up/down/left/right or moving, zooming in/out, confirmation and cancellation.

In the above embodiment, the changes of the reference object in spatial position obtained in step S605 can be a change curve chart; it is assumed that the duration of the preset period of time is 6 acquisition periods; in the period of time, the change curve chart of the reference object in spatial position is shown in Fig. 6b and Fig. 6c respectively, wherein the change in spatial position as shown in Fig. 6b represents head shaking (i.e., cancellation operation), the change in spatial position as shown in Fig. 6c represents an operation of paging right; in Figs. 6b and 6c, numbers 1, 2, 3, 4, 5, 6 represent respectively positions of the reference object in the facial image of the corresponding user.

The present disclosure is described according to Fig. 6d in order to describe more intuitively operations performed when the display control device detects changes of the reference object in spatial position, and in the preset period of time, if
the reference object keeps moving in a first region, it represents paging up;
the reference object keeps moving in a second region, it represents paging down;
the reference object keeps moving in a third region, it represents paging left;
the reference object keeps moving in a fourth region, it represents paging right;
the reference object moves within the first, zero and second regions back and forth, it represents a nodding operation;
the reference object moves within the third, zero and fourth regions back and forth, it represents a head shaking operation;

In the embodiment, only cases in which the reference object moves on a plane parallel to the display plane are provided, in other embodiments, the reference object may also move on planes perpendicular to the display plane, then 3D coordinates can be used to calculate spatial positions of the reference object and change of the reference object in spatial position, for example the X axis represents a direction from left to right, the Y axis represents a direction from up to bottom ad the Z axis represents a direction from front to back; when the object moves in the Z axis direction, a decrease in Z-axis coordinates represents that the reference object is approaching the display, then the display content is zoomed in , otherwise, the display content is zoomed out.

Certainly, the user can as required define by himself/herself operations represented by respective actions and define by himself/herself operation actions, such as visual sensing correction (when the user uses a device for the first time, he/she is required to stare respectively at four corners of the display so that a camera records free distances of spatial coordinates of user's reference object within the range of the display, longitudinal/transverse maximum coordinates and a display position targeted by the user's current gaze so as to ensure accuracy of subsequent operations), display content targeting (after coordinates of a current reference object of the user is analyzed, a content targeting cursor is required to notify the user of a display position targeted by his/her current gaze, if the user considers that the analysis is not accurate, further visual sensing correction can be made until the display position targeted by the gaze is accurately sensed) and the like.

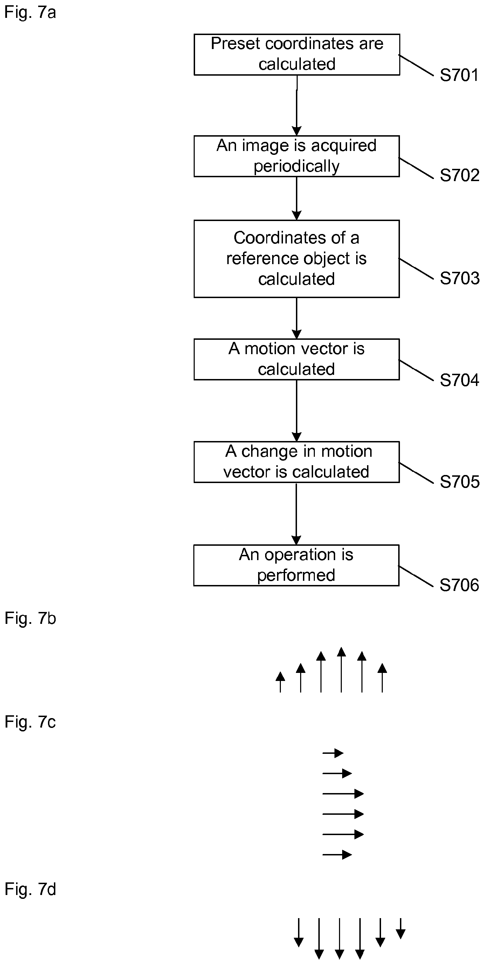

The display control method also has other implementation methods, for example the method as shown in Fig. 7a that is a flow chart of a display control method according to another embodiment of the present disclosure.

It can be seen from Fig. 7a that in an embodiment, the display control method provided by the present disclosure includes the following steps:
S701, preset coordinates are calculated and recorded, which is the same as step S601;
S702, a facial image of a user is periodically acquired, which is the same as step S602;
S703, coordinates of a reference object are calculated, which is the same as step S603;
S704, a motion vector of the reference object is determined;
   the motion vector of the reference object is obtained by subtracting 255 from coordinates of the reference object calculated in step S603;
S705, a change of the motion vector of the reference object within a preset period of time is calculated;
   an obtained change chart of the reference object in motion vector is as shown in Fig. 7b to Fig. 7g.
S706, an operation is performed according to the change obtained in step S705.

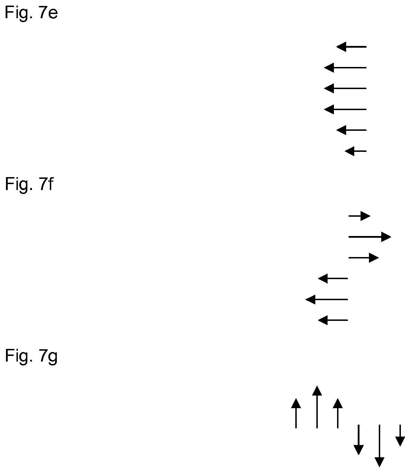

In the above embodiment, changes of the reference object in motion vector obtained in step S705 are shown in a change curve chart; it is assumed that the duration of the preset period of time is 6 acquisition periods; in the period of time, it is assumed that curve charts of the changes of the reference object in motion vector are shown respectively in Fig. 7b to Fig. 7g (sizes and directions of arrows in the figures represent motion vectors of the reference object in six facial images in relation to preset coordinates), wherein
the change in motion vector as shown in Fig. 7b represents looking upwards (i.e., moving upwards or paging up);
the change in motion vector as shown in Fig. 7c represents right shift (i.e., moving right or paging right);
the change in motion vector as shown in Fig. 7d represents looking downwards (i.e., moving downwards or paging down);
the change in motion vector as shown in Fig. 7e represents left shift (i.e., moving left or paging left);
the change in motion vector as shown in Fig. 7f represents head shaking (i.e., cancellation or negation operation);
the change in motion vector as shown in Fig. 7g represents nodding (i.e., confirmation or affirmation operation);

In the embodiment, only cases in which the reference object moves on a plane parallel to the display plane are provided, in other embodiments, the reference object may also move on planes perpendicular to the display plane, then 3D coordinates can be used to calculate spatial positions of the reference object and change of the reference object in spatial position, for example the X axis represents a direction from left to right, the Y axis represents a direction from up to bottom ad the Z axis represents a direction from front to back; when the object moves in the Z axis direction, a decrease in Z-axis coordinates represents that the reference object is approaching the display, then the display content is zoomed in , otherwise, the display content is zoomed out.

The above two embodiments are only preferred methods for acquiring changes of the reference object in position, other methods can certainly be used to acquire changes of the reference object in position, for example an image comparison method (i.e., superimposing and comparing two images captured with a same size).

Compared with the prior art, embodiments of the present disclosure have the following improvements:
firstly, the technique performs display control based on facial images of a user, it is more convenient than existing control techniques through key buttons, touch screen, mouse or even gestures, thus freeing thoroughly both hands of the user;
secondly, the technique performs display control based on relative coordinates of a reference object on the user's face, and the user can set as required the reference object, for example any one pupil, apex of nose or even a marking point on the face can be acceptable, thus making it possible to provide the user with diversified individualized selections;
next, the operation principle of the technique is simple, the display of the terminal can be controlled only according to changes of the reference object in spatial position or in motion vector, thus it has low requirements on the terminal's hardwares so that the technique can be applied widely to daily life;
finally, the technique is convenient and efficient since it can perform control based on a change of the position of the user's pupil when the user is reading;
to sum up, with the implementation of the present disclosure, the user can implement control of content displayed by a terminal using only facial actions rather than a keyboard, a mouse or a touch screen, thus enhancing user experiences.

The above are merely specific embodiments of the present disclosure, and are not intended to limit the present disclosure.

### INDUSTRIAL APPLICABILITY

The present disclosure provides a display control method, device and terminal, wherein the display control device acquires periodically a facial image of a user through a sensing device, calculates coordinates of a reference object according to the facial image, and controls display of a display device according to the coordinates of the reference object and preset coordinates. With the implementation of the present disclosure, the user can implement control of content displayed by a terminal using only facial actions rather than a keyboard, a mouse or a touch screen, thus freeing both hands of the user and enhancing user experiences.

## Claims

1. A display control method, comprising:
acquiring periodically a facial image of a user (S401);
calculating coordinates of a reference point according to the facial image (S402); and
processing the coordinates of the reference point and preset coordinates (S403) and performing an operation (S404); **characterized in that**:
wherein when the reference point is one or two center points of pupils of the user in the facial image, the step of calculating coordinates of the reference point according to the facial image comprises steps of:
acquiring an RGB component image of the facial image, and selecting a red component image (S501 and S502), wherein a RGB ratio for facial skin of the user is R-255, G-204, B-102, and a RGB ratio for pupil center of the user is R-0, G-0, B-0;
obtaining a reverse color diagram of the red component image by subtracting 255 from component values of respective points of the red component image (S503);
acquiring coordinates of peak values in an X axis direction and in a Y axis direction by performing accumulation on the reverse color diagram in the X axis direction and in the Y axis direction respectively (S504); and
determining the coordinates of the reference point according to the coordinates of the peak values (S505).

2. The display control method according to claim 1, the preset coordinates are spatial coordinates of the reference point when the user reads normally currently-displayed content.

3. The display control method according to claim 2, wherein the step of processing the coordinates of the reference point and preset coordinates and performing an operation comprise:
calculating a motion vector of the reference point according to the coordinates of the reference point and the preset coordinates;
performing the operation according to a change of the motion vector of the reference point within a preset period of time.

4. The display control method according to claim 2, wherein the step of processing the coordinates of the reference point and preset coordinates and performing an operation comprise:
determining a spatial position of the reference point according to the coordinates of the reference point and the preset coordinates;
performing the operation according to a change of the spatial position of the reference point within a preset period of time.

5. A display control device (12), comprising an acquisition module (121), a processing module (122) and an execution module (123), wherein
the acquisition module (121) is configured to acquire periodically a facial image of a user;
the processing module (122) is configured to calculate coordinates of a reference point according to the facial image, compare the coordinates of the reference point with preset coordinates and output a processing result to the execution module; and
the execution module (123) is configured to execute an operation according to the processing result; **characterized in that**:
wherein the processing module (122) comprises a calculation unit (1223) configured to, when the reference point is one or two center points of pupils of the user in the facial image, acquire an RGB component image of the facial image, select a red component image, wherein a RGB ratio for facial skin of the user is R-255, G-204, B-102, and a RGB ratio for pupil center of the user is R-0, G-0, B-0;
obtain a reverse color diagram of the red component image by subtracting 255 from component values of respective points of the red component image,
acquire coordinates of peak values in an X axis direction and in a Y axis direction by performing accumulation on the reverse color diagram in the X axis direction and in the Y axis direction respectively, and
determine the coordinates of the reference point according to the coordinates of the peak values.

6. The display control device according to claim 5, the preset coordinates are spatial coordinates of the reference point when the user reads normally currently-displayed content.

7. The display control device according to claim 6, wherein the processing module (122) comprises a first processing unit (1221) configured to calculate a motion vector of the reference point according to the coordinates of the reference point and the preset coordinates, and output a processing result according to a change of the motion vector of the reference point within a preset period of time.

8. The display control device according to claim 6, wherein the processing module (122) comprises a second processing unit (1222) configured to calculate a spatial position of the reference point according to the coordinates of the reference point and the preset coordinates, and output a processing result according to a change of the spatial position of the reference point within a preset period of time.

9. A display control terminal (1), **characterized by** comprising a sensing device (11), a display device (13) and the display control device (12) according to any one of claims 5 to 8.

## Patentansprüche

1. Anzeigesteuerverfahren, das Folgendes umfasst:
periodisches Erfassen eines Bildes des Gesichts eines Benutzers (S401);
Berechnen von Koordinaten eines Referenzpunktes entsprechend dem Bild des Gesichts (S402); und
Verarbeiten der Koordinaten des Referenzpunktes und voreingestellter Koordinaten (S403) und Durchführen einer Operation (S404); **dadurch gekennzeichnet, dass**:
dann, wenn es sich bei dem Referenzpunkt um einen oder zwei Mittelpunkte von Pupillen des Benutzers in dem Bild des Gesichts handelt, der Schritt des Berechnens von Koordinaten des Referenzpunktes entsprechend dem Bild des Gesichts folgende Schritte umfasst:
Erfassen eines RGB-Komponentenbildes des Bildes des Gesichts und Auswählen eines Rotkomponentenbildes (S501 und S502), wobei ein RGB-Verhältnis für die Gesichtshaut des Benutzers R-255, G-204, B-102 ist und ein RGB-Verhältnis für die Pupillenmitte des Benutzers R-0, G-0, B-0 ist;
Erhalten eines Umkehrfarbdiagramms des Rotkomponentenbildes durch Subtrahieren von 255 von Komponentenwerten jeweiliger Punkte des Rotkomponentenbildes (S503);
Erfassen von Koordinaten von Spitzenwerten in einer X-Achsen-Richtung und in einer Y-Achsen-Richtung durch Ausführen einer Akkumulation am Umkehrfarbdiagramm in der X-Achsen-Richtung bzw. in der Y-Achsen-Richtung (S504); und
Bestimmen der Koordinaten des Referenzpunktes entsprechend den Koordinaten der Spitzenwerte (S505).

2. Anzeigesteuerverfahren nach Anspruch 1, wobei die voreingestellten Koordinaten Raumkoordinaten des Referenzpunktes sind, wenn der Benutzer normal aktuell angezeigten Inhalt liest.

3. Anzeigesteuerverfahren nach Anspruch 2, wobei der Schritt des Verarbeitens der Koordinaten des Referenzpunktes und voreingestellter Koordinaten und des Durchführens einer Operation Folgendes umfasst:
Berechnen eines Bewegungsvektors des Referenzpunktes entsprechend den Koordinaten des Referenzpunktes und den voreingestellten Koordinaten;
Durchführen der Operation entsprechend einer Änderung des Bewegungsvektors des Referenzpunktes innerhalb eines vorgegebenen Zeitraums.

4. Anzeigesteuerverfahren nach Anspruch 2, wobei der Schritt des Verarbeitens der Koordinaten des Referenzpunktes und voreingestellter Koordinaten und des Durchführens einer Operation Folgendes umfasst:
Bestimmen einer räumlichen Position des Referenzpunktes entsprechend den Koordinaten des Referenzpunktes und den voreingestellten Koordinaten;
Durchführen der Operation entsprechend einer Änderung der räumlichen Position des Referenzpunktes innerhalb eines vorgegebenen Zeitraums.

5. Anzeigesteuervorrichtung (12), mit einem Erfassungsmodul (121), einem Verarbeitungsmodul (122) und einem Ausführungsmodul (123), wobei
das Erfassungsmodul (121) so eingerichtet ist, dass es periodisch ein Bild des Gesichts eines Benutzers erfasst;
das Verarbeitungsmodul (122) so eingerichtet ist, dass es entsprechend dem Bild des Gesichts Koordinaten eines Referenzpunktes berechnet, die Koordinaten des Referenzpunktes mit voreingestellten Koordinaten vergleicht und ein Verarbeitungsergebnis an das Ausführungsmodul ausgibt; und
das Ausführungsmodul (123) so eingerichtet ist, dass es entsprechend dem Verarbeitungsergebnis eine Operation ausführt; **dadurch gekennzeichnet, dass**:
das Verarbeitungsmodul (122) eine Berechnungseinheit (1223) umfasst, die so eingerichtet ist, dass sie dann, wenn es sich bei dem Referenzpunkt um einen oder zwei Mittelpunkte von Pupillen des Benutzers in dem Bild des Gesichts handelt, ein RGB-Komponentenbild des Bildes des Gesichts erfasst und ein Rotkomponentenbild auswählt, wobei ein RGB-Verhältnis für die Gesichtshaut des Benutzers R-255, G-204, B-102 ist und ein RGB-Verhältnis für die Pupillenmitte des Benutzers R-0, G-0, B-0 ist;
ein Umkehrfarbdiagramm des Rotkomponentenbildes durch Subtrahieren von 255 von Komponentenwerten jeweiliger Punkte des Rotkomponentenbildes erhält,
Koordinaten von Spitzenwerten in einer X-Achsen-Richtung und in einer Y-Achsen-Richtung durch Ausführen einer Akkumulation am Umkehrfarbdiagramm in der X-Achsen-Richtung bzw. in der Y-Achsen-Richtung erfasst, und
die Koordinaten des Referenzpunktes entsprechend den Koordinaten der Spitzenwerte bestimmt.

6. Anzeigesteuervorrichtung nach Anspruch 5, wobei die voreingestellten Koordinaten Raumkoordinaten des Referenzpunktes sind, wenn der Benutzer normal aktuell angezeigten Inhalt liest.

7. Anzeigesteuervorrichtung nach Anspruch 6, wobei das Verarbeitungsmodul (122) eine erste Verarbeitungseinheit (1221) umfasst, die so eingerichtet ist, dass sie entsprechend den Koordinaten des Referenzpunktes und den voreingestellten Koordinaten einen Bewegungsvektor des Referenzpunktes berechnet und entsprechend einer Änderung des Bewegungsvektors des Referenzpunktes innerhalb eines vorgegebenen Zeitraums ein Verarbeitungsergebnis ausgibt.

8. Anzeigesteuervorrichtung nach Anspruch 6, wobei das Verarbeitungsmodul (122) eine zweite Verarbeitungseinheit (1222) umfasst, die so eingerichtet ist, dass sie entsprechend den Koordinaten des Referenzpunktes und den voreingestellten Koordinaten eine räumliche Position des Referenzpunktes berechnet und entsprechend einer Änderung der räumlichen Position des Referenzpunktes innerhalb eines vorgegebenen Zeitraums ein Verarbeitungsergebnis ausgibt.

9. Anzeigesteuergerät (1), **dadurch gekennzeichnet, dass** es eine Sensorvorrichtung (11), eine Anzeigevorrichtung (13) und die Anzeigesteuervorrichtung (12) nach einem der Ansprüche 5 bis 8 umfasst.

## Revendications

1. Procédé de commande d'affichage, comprenant :
la saisie périodique d'une image faciale d'un utilisateur (S401) ;
le calcul de coordonnées d'un point de référence conformément à l'image faciale (S402) ; et
le traitement des coordonnées du point de référence et de coordonnées prédéfinies (S403), et la réalisation d'une opération (S404) ; **caractérisé en ce que**
lorsque le point de référence est formé par un ou deux centres de pupilles de l'utilisateur dans l'image faciale, l'étape de calcul de coordonnées du point de référence conformément à l'image faciale comprend les étapes suivantes :
la saisie d'une image de composantes RGB de l'image faciale et le choix d'une image de composante rouge (S501 et S502), un rapport RGB pour la peau du visage de l'utilisateur étant R-255, G-204, B-102, et un rapport RGB pour le centre de pupille de l'utilisateur étant R-0, G-0, B-0 ;
l'obtention d'un diagramme de couleur inversé de l'image de composante rouge en soustrayant 255 de valeurs de composantes de points respectifs de l'image de composante rouge (S503) ;
la saisie de coordonnées de valeurs de crête dans un sens d'axe X et dans un sens d'axe Y en réalisant une accumulation au niveau du diagramme de couleur inversé dans le sens d'axe X et dans le sens d'axe Y, respectivement, (S504) ; et
la détermination des coordonnées du point de référence conformément aux coordonnées des valeurs de crête (S505).

2. Procédé de commande d'affichage selon la revendication 1, les coordonnées prédéfinies étant des coordonnées spatiales du point de référence lorsque l'utilisateur lit normalement un contenu actuellement affiché.

3. Procédé de commande d'affichage selon la revendication 2, l'étape de traitement des coordonnées du point de référence et de coordonnées prédéfinies et la réalisation d'une opération comprenant :
le calcul d'un vecteur de mouvement du point de référence conformément aux coordonnées du point de référence et aux coordonnées prédéfinies ;
la réalisation de l'opération conformément à un changement du vecteur de mouvement du point de référence en l'espace d'un laps de temps prédéfini.

4. Procédé de commande d'affichage selon la revendication 2, l'étape de traitement des coordonnées du point de référence et de coordonnées prédéfinies et la réalisation d'une opération comprenant :
la détermination d'une position dans l'espace du point de référence conformément aux coordonnées du point de référence et aux coordonnées prédéfinies ;
la réalisation de l'opération conformément à un changement de la position dans l'espace du point de référence en l'espace d'un laps de temps prédéfini.

5. Dispositif de commande d'affichage (12), comprenant un module de saisie (121), un module de traitement (122) et un module d'exécution (123),
le module de saisie (121) étant réalisé de manière à saisir périodiquement une image faciale d'un utilisateur ;
le module de traitement (122) étant réalisé de manière à calculer des coordonnées d'un point de référence conformément à l'image faciale, à comparer les coordonnées du point de référence avec des coordonnées prédéfinies, et à sortir un résultat de traitement pour le module d'exécution ; et
le module d'exécution (123) étant réalisé de manière à exécuter une opération conformément au résultat de traitement ; **caractérisé en ce que** :
le module de traitement (122) comprend une unité de calcul (1223) qui est réalisée de manière à saisir, lorsque le point de référence est formé par un ou deux centres de pupilles de l'utilisateur dans l'image faciale, une image de composantes RGB de l'image faciale, à choisir une image de composante rouge, un rapport RGB pour la peau du visage de l'utilisateur étant R-255, G-204, B-102, et un rapport RGB pour le centre de pupille de l'utilisateur étant R-0, G-0, B-0 ;
à obtenir un diagramme de couleur inversé de l'image de composante rouge en soustrayant 255 de valeurs de composantes de points respectifs de l'image de composante rouge ;
à saisir des coordonnées de valeurs de crête dans un sens d'axe X et dans un sens d'axe Y en réalisant une accumulation au niveau du diagramme de couleur inversé dans le sens d'axe X et dans le sens d'axe Y, respectivement ; et
à déterminer des coordonnées du point de référence conformément aux coordonnées des valeurs de crête.

6. Dispositif de commande d'affichage selon la revendication 5, les coordonnées prédéfinies étant des coordonnées spatiales du point de référence lorsque l'utilisateur lit normalement un contenu actuellement affiché.

7. Dispositif de commande d'affichage selon la revendication 6, le module de traitement (122) comprenant une première unité de traitement (1221) qui est réalisée de manière à calculer un vecteur de mouvement du point de référence conformément aux coordonnées du point de référence et aux coordonnées prédéfinies, et à sortir un résultat de traitement conformément à un changement du vecteur de mouvement du point de référence en l'espace d'un laps de temps prédéfini.

8. Dispositif de commande d'affichage selon la revendication 6, le module de traitement (122) comprenant une deuxième unité de traitement (1222) qui est réalisée de manière à calculer une position dans l'espace du point de référence conformément aux coordonnées du point de référence et aux coordonnées prédéfinies, et à sortir un résultat de traitement conformément à un changement de la position dans l'espace du point de référence en l'espace d'un laps de temps prédéfini.

9. Terminal de commande d'affichage (1), **caractérisé en ce qu'**il comprend un dispositif capteur (11), un dispositif d'affichage (13) et le dispositif de commande d'affichage (12) selon l'une des revendications 5 à 8.
